# EUROPÄISCHE PATENTSCHRIFT

(11) **EP 0 973 238 B1**
(45) Veröffentlichungstag und Bekanntmachung des Hinweises auf die Patenterteilung: **28.02.2007**
(21) Anmeldenummer: 99111302.8
(22) Anmeldetag: 10.06.1999
(51) Int. Cl.: H02G 3/04

(54) **Gitterkabelrinne**
Wire cable raceway
Conduite de câbles en fils

(30) Priorität: 11.07.1998 DE 19831145
(43) Veröffentlichungstag der Anmeldung: 19.01.2000
(73) Patentinhaber: OBO Bettermann GmbH & Co. KG, 58710 Menden (DE)
(72) Erfinder: Nickel, Wilfried, 58710 Menden (DE)
(74) Vertreter: Köchling, Conrad-Joachim

(56) Entgegenhaltungen:
- EP-A- 0 418 167
- GB-A- 1 189 668

## Beschreibung

Die Erfindung betrifft eine Gitterkabelrinne aus stoffschlüssig miteinander verbundenen U-förmigen Querdrähten und Längsdrähten.

Gitterkabelrinnen sind beispielsweise aus der EP-A-0 418 167 bekannt. Solche Gitterkabelrinnen bestehen aus Metall, insbesondere Stahl. Bei diesen Gitterkabelrinnen sind vorzugsweise in regelmäßigen Abständen voneinander U-förmige Querdrähte angeordnet, die durch Längsdrähte miteinander verbunden sind, die an den Berührungsstellen mit den Querdrähten verschweißt sind. Die Längsdrähte bilden dabei quasi die Seitenwandungen und gegebenenfalls auch die Bodenwandung einer entsprechenden Gitterkabelrinne. Üblicherweise werden solche Gitterkabelrinnen auf Stoß verlegt, wobei sie an den Stoßstellen mittels zusätzlicher Verbindungselemente miteinander verbunden werden. Im Stand der Technik sind dazu lose Verbindungselemente, beispielsweise Klemmschellen oder dergleichen bekannt. Aus der EP-A-0 418 167 ist es auch bekannt, am Ende eines solchen Gitterkabelrinnenteilstückes Befestigungsmittel anzuschweißen, die mit dem Ende eines weiteren Teilstückes rastverbunden werden können. Es handelt sich hierbei um zunächst separate Teile, die an dem einen Ende einer Gitterkabelrinne fixiert, insbesondere angeschweißt werden müssen und dann mit dem Ende einer gestoßenen weiteren Gitterkabelrinne verrastet werden können.

Ausgehend von diesem Stand der Technik liegt der Erfindung die Aufgabe zugrunde, eine Gitterkabelrinne zu schaffen, die ohne zusätzliche Verbinder aus einzelnen Teilstücken gebildet werden kann, die miteinander verbunden werden.

Zur Lösung dieser Aufgabe schlägt die Erfindung vor, dass jedes Teilstück der Gitterkabelrinne an seinen Enden unterschiedlich ausgebildet ist, wobei das erste Ende in Breite und Höhe verjüngt ist und das zweite Ende in Breite und Höhe unverjüngt ist, oder dass das erste Ende verjüngt ist und das zweite Ende erweitert ist, oder dass das erste Ende unverjüngt ist und das zweite Ende erweitert ist (jeweils in Breite und Höhe), so dass das erste Ende eines Teilstücks in das zweite Ende eines weiteren Teilstücks quer zur Längserstreckung der Teilstücke einsetzbar ist, und dass die Längsdrähte über den Längsverlauf des Teilstückes vom zweiten Ende bis nahe des ersten Endes außenseitig an den U-förmigen Querdrähten fixiert sind, wobei am zweiten Ende mindestens zwei Querdrähte eng benachbart, einen Spalt in der Breite eines Querdrahtes zwischen sich bildend angeordnet sind, dass am ersten Ende die Längsdrähte nach innen versetzt verkröpft sind und mindestens ein Querdraht gleicher Abmessung wie die anderen Querdrähte außenseitig an den auf die Verkröpfung folgenden Bereichen der Längsdrähte fixiert ist.

Gemäß der Erfindung bestehen die einzelnen Teilstücke lediglich aus entsprechenden Gitterkabelrinnenabschnitten, die durch entsprechende Formgebung an den Enden derart ausgebildet sind, dass die Teilstücke an den Enden einander überlappend angeordnet werden können und durch Querverschiebung miteinander verbunden werden können. Zusätzliche Befestigungselemente oder dergleichen sind dabei nicht erforderlich.

Eine alternative Lösung der Aufgabe wird darin gesehen, dass jedes Teilstück der Gitterkabelrinne an seinen Enden unterschiedlich ausgebildet ist, wobei das erste Ende in Breite und Höhe verjüngt ist und das zweite Ende in Breite und Höhe unverjüngt ist, oder dass das erste Ende verjüngt ist und das zweite Ende erweitert ist, oder dass das erste Ende unverjüngt ist und das zweite Ende erweitert ist (jeweils in Breite und Höhe), so dass das erste Ende eines Teilstücks in das zweite Ende eines weiteren Teilstücks quer zur Längserstreckung der Teilstücke einsetzbar ist, und dass die Längsdrähte über den Längsverlauf des Teilstückes mit Ausnahme der beiden Enden außenseitig an den formgleichen Querdrähten fixiert sind, dass am ersten Ende die Längsdrähte um das Querschnittsmaß eines Querdrahtes nach innen versetzt verkröpft sind und mindestens ein Querdraht außenseitig an dem auf die Verkröpfung folgenden Bereich der Längsdrähte fixiert ist, wobei die Basis des Querdrahtes um die doppelte Querdrahtstärke breiter ist als die der anderen Querdrähte, und dass am zweiten Ende mindestens zwei Querdrähte der größeren Basisabmessung eng benachbart angeordnet sind, die einen Spalt in der Breite des Querdrahtes zwischen sich bilden, wobei an diesen Querdrähten außenseitig die sich erweiternd verkröpften Längsdrähte fixiert sind, oder die einen Längsabstand voneinander haben, der um die doppelte Drahtabmessung größer ist als der Abstand zweier Querdrähte, die am ersten Ende im auf die Verkröpfung folgenden Bereich mit Abstand voneinander angeordnet sind.

Um die Verbindungslage zu sichern, kann zudem vorgesehen sein, dass die Querdrähte am ersten und zweiten Ende Rastverformungen aufweisen, die bei ineinander gesteckten Teilstücken ineinander greifen.

Die Erfindung stellt einfach zu formende Gitterkabelrinnen zur Verfügung, die lediglich durch überlappende Anordnung und Querverschiebung miteinander verbunden werden können, wobei zudem eine Lagesicherung in der Lage erreicht ist, in welcher der beiden korrespondierenden Enden der jeweiligen Teilstücke ineinander gesteckt sind.

Ausführungsbeispiele der Erfindung sind in der Zeichnung dargestellt und im folgenden näher beschrieben.

Es zeigt:
- Figur 1: eine erste Ausführungsform in Ansicht;
- Figur 2: eine Einzelheit in Draufsicht;
- Figur 3: die Einzelheit in Seitenansicht;
- Figur 4 bis 6: eine Variante in den Ansichten gemäß Figur 1 bis 3;
- Figur 7 bis 9: eine zweite Variante in der Ansicht gemäß Figur 1 bis 3;
- Figur 10 bis 12: eine weitere Variante in der Ansicht gemäß Figur 1 bis 3.

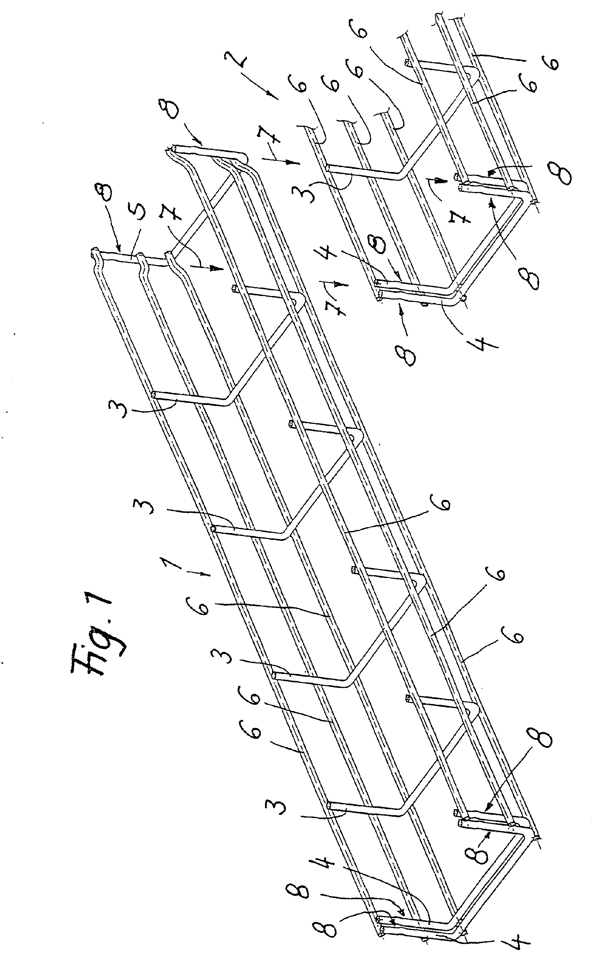

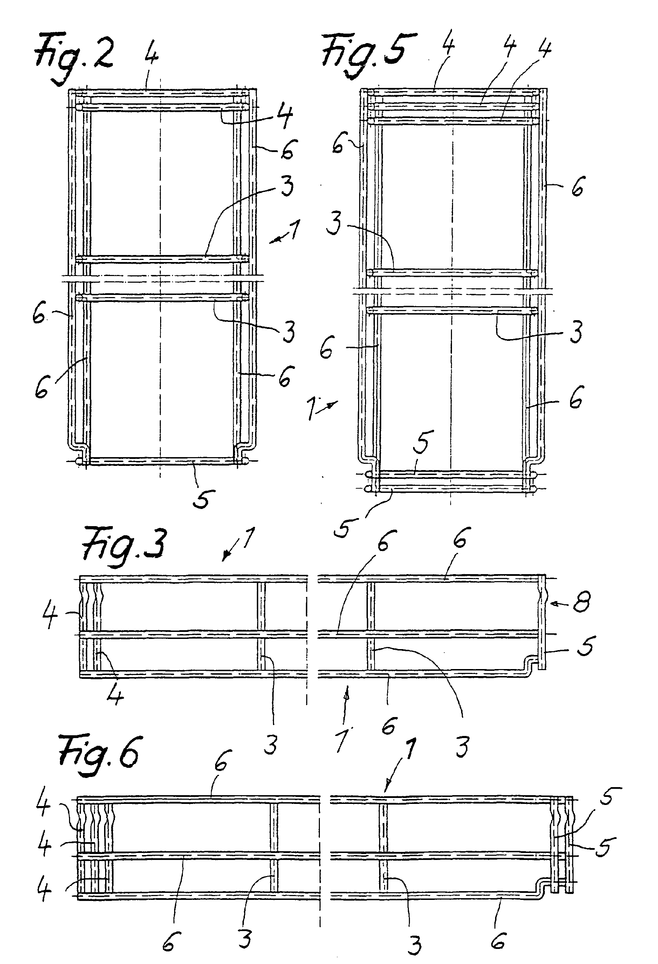

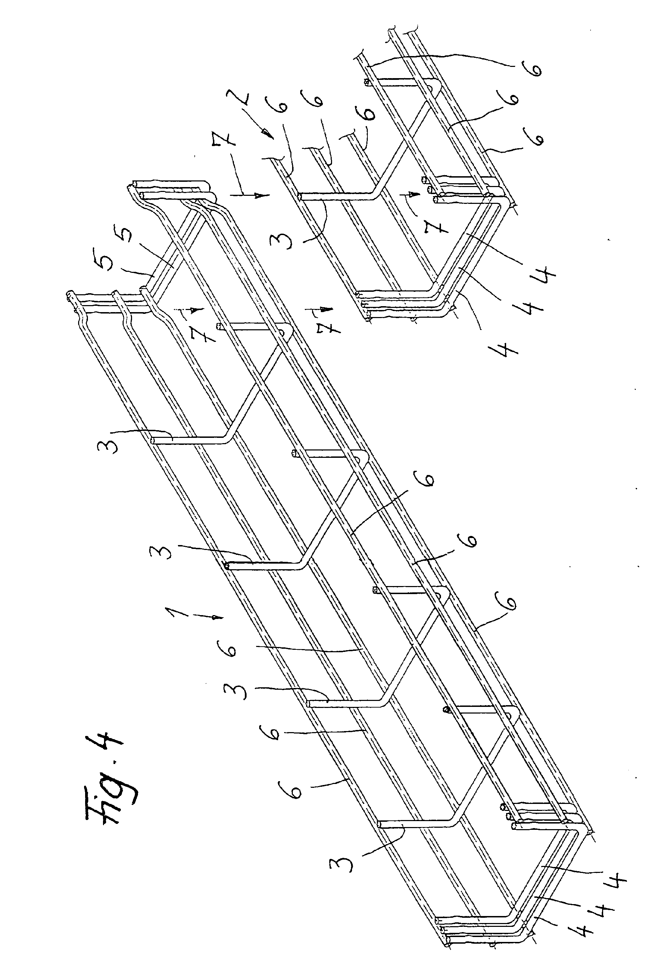

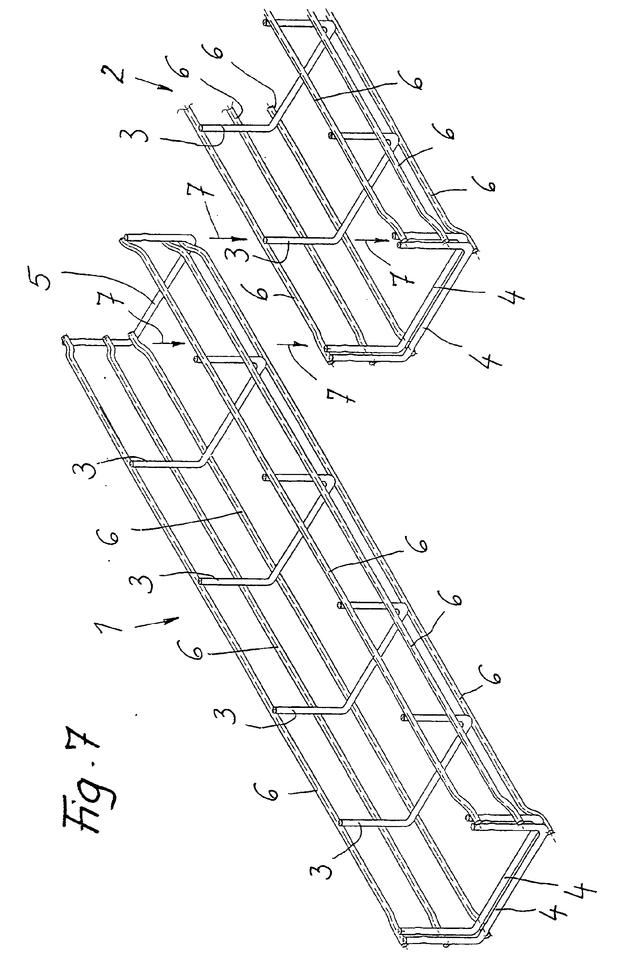

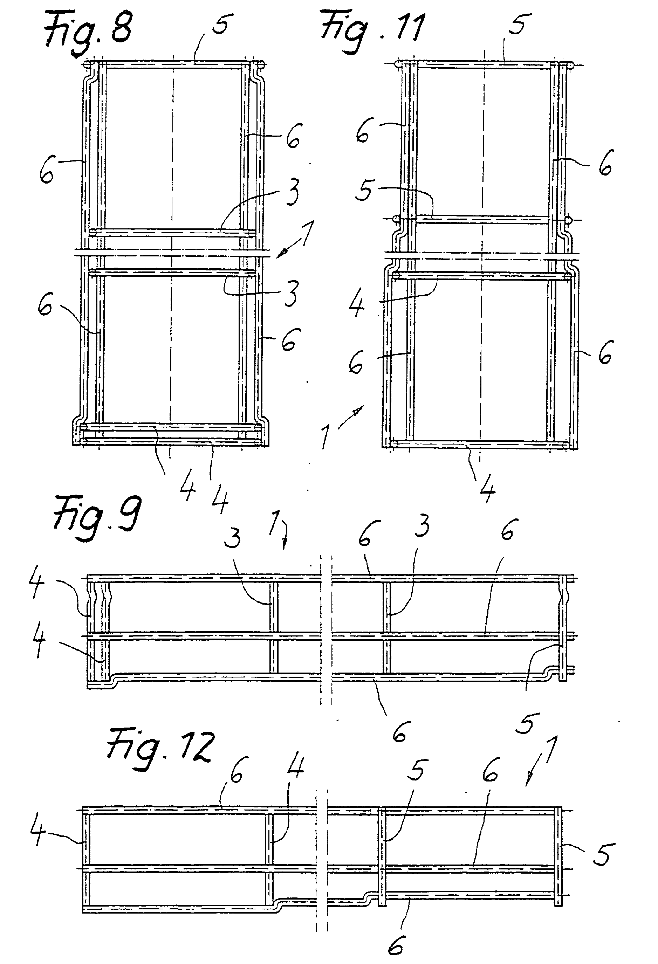

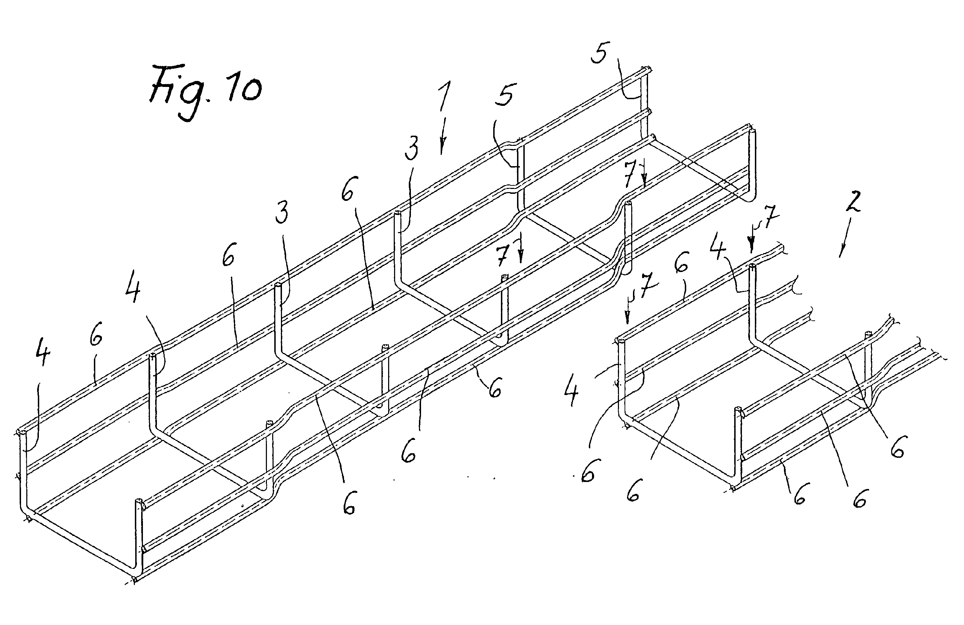

Alle Ausführungsformen zeigen Teilstücke 1,2 von Gitterkabelrinnen, die aus miteinander verschweißten U-förmigen Querdrähten 3,4,5 und Längsdrähten 6 bestehen. Jedes Teilstück 1,2 ist an seinen Enden unterschiedlich ausgebildet. Bei der Ausführungsform nach Figur 1 bis 3 und nach Figur 4 bis 6 ist jeweils das erste Ende, welches in Figur 1 bezüglich des Teilstückes 1 rechts gezeigt ist, in Breite und Höhe verjüngt, während das andere, zweite Ende des Teilstückes 1 bzw. 2 in Breite und Höhe unverjüngt ausgebildet ist. Bei der Ausführungsform nach Figur 7 bis Figur 9 und nach Figur 10 bis Figur 12 ist ebenfalls das erste Ende jedes Teilstückes 1,2 verjüngt, während das zweite Ende erweitert ist. Durch diese Ausbildung ist es möglich, die beiden Teilstücke entsprechend den Bewegungspfeilen 7 ineinanderzustecken, indem beispielsweise das erste Teilstück 1 von oben in den Endbereich des zweiten Teilstückes 2 eingesetzt und eingedrückt wird.

Bei der Ausführungsform nach Figur 1 bis 3 sind die Längsdrähte 6 über den Längsverlauf des Teilstückes 1 bzw. 2 vom zweiten Ende bis nahe des ersten Endes außenseitig an den U-förmigen Querdrähten 3,4 angeschweißt. Sämtliche Querdrähte 3,4 weisen gleiche Abmessung auf. Am zweiten Ende sind zwei Querdrähte 4 eng benachbart angeordnet. Diese bilden zwischen sich einen Spalt in der Breite eines Querdrahtes 5, der am ersten Ende des Teilstückes 1 bzw. 2 angeordnet ist. In diesem Bereich sind die Längsdrähte 6 nach innen verkröpft. Der Querdraht 5 weist wiederum die gleiche Abmessung auf wie die Querdrähte 3 und 4, wobei aber die Längsdrähte 6 innenseitig an diesem Querdraht 5 angeschweißt sind. Diese Ausbildung ermöglicht es, die beiden Teilstücke 1,2 in der Weise ineinanderzusetzen, daß in der Sollposition der Querdraht 5 zwischen den beiden Querdrähten 4 eingesetzt ist. In Figur 4 bis 6 ist eine analoge Ausbildung gezeigt, bei der lediglich am einen Ende zwei Querdrähte 5 mit geringem Abstand voneinander angeordnet sind und am anderen Ende drei Querdrähte 4 mit entsprechendem Spaltabstand angeordnet sind, so daß in der Montagesollage die beiden Querdrähte 5 zwischen jeweils zwei Querdrähte 4 in den entsprechenden Spalt eingeschoben werden.

Um die Sollage zu sichern sind an den Querdrähten 4 und 5 Rastverformungen 8 vorgesehen, die durch in Kanallängsrichtung vorragende Verwinklungen gebildet sind. Durch diese Rastverformungen wird eine Sicherung der Einstecklage gewährleistet.

Bei der Ausbildung gemäß Figur 1 bis 3 und gemäß Figur 4 bis 6 bestehen die Querdrähte 3, 4 und 5 aus identisch geformten und bemessenen Teilen.

Bei der Ausbildung nach Figur 7 bis 9 sind die Längsdrähte 6 über den Längsverlauf der Teilstücke 1,2 mit Ausnahme der Endbereiche außenseitig an den formgleichen und identisch bemessenen Querdrähten 3 angeschweißt. Am ersten Ende (in Figur 7 am rechten Ende des oberen Teilstückes 1) sind die Längsdrähte 6 um das Querschnittsmaß eines Querdrahtes 3 nach innen versetzt verkröpft. Außenseitig ist auf diesen Verkröpfungsbereich außenseitig ein Querdraht 5 auf den auf die Verkröpfung folgenden Bereich der Längsdrähte 6 aufgesetzt und verschweißt, wobei die Basis des Querdrahtes 5 um die doppelte Drahtstärke des Querdrahtes 5 breiter ist als die Querdrähte 3. Am zweiten Ende sind mindestens zwei Querdrähte 4 der gleichen größeren Basisabmessung wie der Querdraht 5 eng benachbart angeordnet, so daß sie einen Spalt in der Breite des Querdrahtes 5 zwischen sich bilden. An diesen Querdrähten 4 sind außenseitig die sich erweiternd verkröpften Längsdrähte 6 angeschweißt.

Die Ausführungsform nach Figur 10 bis 12 ist analog der Ausführungsform nach Figur 7 bis 9 ausgebildet, wobei die Querdrähte 4 in Längsrichtung des Rinnenteilstückes 1 bzw. 2 gesehen einen Abstand voneinander haben, der um die doppelte Drahtabmessung größer ist als der Abstand zweier Querdrähte 5, die am ersten Ende im auf die Verkröpfung folgenden Bereich mit Abstand voneinander angeordnet sind.

Während bei der Ausführungsform nach Figur 7 bis 9 die Verrastung analog der Ausführungsform nach Figur 1 bis 6 erfolgt, erfolgt das Ineinanderstecken bei der Ausführungsform nach Figur 10 bis 12 in der Weise, daß das relativ Lange erste Endteil mit den beiden Querdrähten 5 in den zweiten Endteil zwischen die Querdrähte 4 eingesteckt wird entsprechend den Bewegungspfeilen 7. Es erfolgt hierbei eine größere Abstützung im Überdeckungsbereich der beiden Teilstücke 1,2, wobei auch hier zusätzliche Rastverformungen 8 vorgesehen sein können.

Bei sämtlichen Ausführungsformen ist das Zusammenfügen einer Gitterkabelbahn aus einer Vielzahl von Teilstücken ohne zusätzliche Verbinder möglich.

Die Erfindung ist nicht auf die Ausführungsbeispiele beschränkt sondern im Rahmen der Offenbarung vielfach variabel.

## Patentansprüche

1. Gitterkabelrinne aus stoffschlüssig miteinander verbundenen U-förmigen Querdrähten (3,4,5) und Längsdrähten (6), **dadurch gekennzeichnet, dass** jedes Teilstück (1,2) der Gitterkabelrinne an seinen Enden unterschiedlich ausgebildet ist, wobei das erste Ende in Breite und Höhe verjüngt ist und das zweite Ende in Breite und Höhe unverjüngt ist, oder dass das erste Ende verjüngt ist und das zweite Ende erweitert ist, oder dass das erste Ende unverjüngt ist und das zweite Ende erweitert ist (jeweils in Breite und Höhe), so dass das erste Ende eines Teilstücks in das zweite Ende eines weiteren Teilstücks quer zur Längserstreckung der Teilstücke einsetzbar ist, und dass die Längsdrähte (6) über den Längsverlauf des Teilstückes vom zweiten Ende bis nahe des ersten Endes außenseitig an den U-förmigen Querdrähten (3,4) fixiert sind, wobei am zweiten Ende mindestens zwei Querdrähte (4) eng benachbart, einen Spalt in der Breite eines Querdrahtes (5) zwischen sich bildend angeordnet sind, dass am ersten Ende die Längsdrähte (6) nach innen versetzt verkröpft sind und mindestens ein Querdraht (5) gleicher Abmessung wie die anderen Querdrähte (3,4) außenseitig an den auf die Verkröpfung folgenden Bereichen der Längsdrähte (6) fixiert ist.

2. Gitterkabelrinneaus stoffschlüssig miteinander verbundenen U-förmigen Querdrähten (3,4,5) und Längsdrähten (6), **dadurch gekennzeichnet, dass** jedes Teilstück (1,2) der Gitterkabelrinne an seinen Enden unterschiedlich ausgebildet ist, wobei das erste Ende in Breite und Höhe verjüngt ist und das zweite Ende in Breite und Höhe unverjüngt ist, oder dass das erste Ende verjüngt ist und das zweite Ende erweitert ist, oder dass das erste Ende unverjüngt ist und das zweite Ende erweitert ist (jeweils in Breite und Höhe), so dass das erste Ende eines Teilstücks in das zweite Ende eines weiteren Teilstücks quer zur Längserstreckung der Teilstücke einsetzbar ist, und dass die Längsdrähte (6) über den Längsverlauf des Teilstückes mit Ausnahme der beiden Enden außenseitig an den formgleichen Querdrähten (3) fixiert sind, dass am ersten Ende die Längsdrähte (6) um das Querschnittsmaß eines Querdrahtes nach innen versetzt verkröpft sind und mindestens ein Querdraht (5) außenseitig an dem auf die Verkröpfung folgenden Bereich der Längsdrähte (6) fixiert ist, wobei die Basis des Querdrahtes (5) um die doppelte Querdrahtstärke breiter ist als die der anderen Querdrähte (3), und dass am zweiten Ende mindestens zwei Querdrähte (4) der größeren Basisabmessung eng benachbart angeordnet sind, die einen Spalt in der Breite des Querdrahtes (5) zwischen sich bilden, wobei an diesen Querdrähten (4) außenseitig die sich erweiternd verkröpften Längsdrähte (6) fixiert sind, oder die einen Längsabstand voneinander haben, der um die doppelte Drahtabmessung größer ist als der Abstand zweier Querdrähte (5), die am ersten Ende im auf die Verkröpfung folgenden Bereich mit Abstand voneinander angeordnet sind.

3. Gitterkabelrinne nach einem der Ansprüche 1 bis 2, **dadurch gekennzeichnet, dass** die Querdrähte (4,5) am ersten und zweiten Ende Rastverformungen (8) aufweisen, die bei ineinander gesteckten Teilstücken ineinander greifen.

## Claims

1. A wire cable trough consisting of U-shaped transverse wires (3, 4, 5) and longitudinal wires (6) that are metallurgically joined to each other,
**characterised in that** each section (1, 2) of the wire cable trough is designed differently at its ends, wherein the width and the height of the first end is reduced and the width and the height of the second end is not reduced, or the first end is reduced and the second end is widened, or the first end is not reduced and the second end is widened (in each case with respect to the width and the height), so that the first end of a section can be inserted into the second end of another section at right angles to the longitudinal extension of the sections,
and **in that** the longitudinal wires (6) are fixed, over the longitudinal path of the section from the second end to close to the first end, to the outside of the U-shaped transverse wires (3, 4), wherein at the second end at least two transverse wires (4) are disposed close together and between them they form a gap which is the width of a transverse wire (5),
and **in that** at the first end the longitudinal wires (6) are inwardly bent and offset and at least one transverse wire (5) having the same dimensions as the other transverse wires (3, 4) is fixed to the outside of the regions of the longitudinal wires (6) following the bent portion.

2. A wire cable trough consisting of U-shaped transverse wires (3, 4, 5) and longitudinal wires (6) that are metallurgically joined to each other,
**characterised in that** each section (1, 2) of the wire cable trough is designed differently at its ends, wherein the width and height of the first end is reduced and the width and height of the second end is not reduced, or the first end is reduced and the second end is widened, or the first end is not reduced and the second end is widened (in each case with respect to width and height), so that the first end of a section can be inserted into the second end of another section at right angles to the longitudinal extension of the sections,
and **in that** the longitudinal wires (6) are fixed, over the longitudinal path of the section with the exception of the two ends, to the outside of the identically shaped transverse wires (3),
and **in that** at the first end the longitudinal wires (6) are inwardly bent and offset by the cross-sectional dimension of a transverse wire and at least one transverse wire (5) is fixed to the outside of the region of the longitudinal wires (6) that follows the bent portion, wherein the bottom of the transverse wire (5) is wider than the bottom of the other transverse wires (3) by double the thickness of the transverse wire,
and **in that** at the second end at least two transverse wires (4) having the larger bottom dimension are disposed close together, and between them they form a gap which is the width of the transverse wire (5), wherein the longitudinal wires (6) bent so that they become wider apart are fixed to the outside of these transverse wires (4), or the transverse wires (4) have a longitudinal distance between them which is greater by double the wire dimension than the distance between two transverse wires (5), which at the first end are disposed spaced apart in the region following the bent portion.

3. A wire cable trough according to one of Claims 1 to 2, **characterised in that** at the first and second ends the cross wires (4, 5) comprise catch formations (8), which interlock when the sections are nested.

## Revendications

1. Conduite de câbles en fils constituée de fils transversaux (3, 4, 5) en forme de U et de fils longitudinaux (6) reliés les uns aux autres par adhésion de matière, **caractérisée en ce que** chaque tronçon (1, 2) de la conduite de câbles en fils est conçue de façon différente à ses extrémités, la première extrémité étant rétrécie en largeur et en hauteur et la seconde extrémité n'étant pas rétrécie en largeur et en hauteur, ou **en ce que** la première extrémité est rétrécie et la seconde extrémité est élargie ou **en ce que** la première extrémité n'est pas rétrécie et la seconde extrémité est élargie, (respectivement en largeur et hauteur), de sorte que la première extrémité d'un tronçon peut être insérée dans la seconde extrémité d'un autre tronçon transversalement à l'extension longitudinal des tronçons, et **en ce que** les fils longitudinaux (6) sont fixés le long du parcours longitudinal du tronçon de la seconde extrémité jusqu'à proximité de la première extrémité à l'extérieur sur les fils transversaux (3, 4) en forme de U, deux fils transversaux (4) étant disposés de façon étroitement voisine sur la seconde extrémité, formant entre eux une fente de la largeur d'un fil transversal (5), **en ce que** sur la première extrémité, les fils longitudinaux (6) sont coudés de façon décalée vers l'intérieur et au moins un fil transversal (5) de même dimension que les autres fils transversaux (3, 4) est fixé à l'extérieur sur les zones des fils longitudinaux (6) suivant le coude.

2. Conduite de câbles en fils constituée de fils transversaux (3, 4, 5) en forme de U et de fils longitudinaux (6) reliés les uns aux autres par adhésion de matière, **caractérisée en ce que** chaque tronçon (1, 2) de la conduite de câbles en fils est conçue de façon différente à ses extrémités, la première extrémité étant rétrécie en largeur et en hauteur et la seconde extrémité n'étant pas rétrécie en largeur et en hauteur, ou **en ce que** la première extrémité est rétrécie et la seconde extrémité est élargie, ou **en ce que** la première extrémité n'est pas rétrécie et la seconde extrémité est élargie (respectivement en largeur et en hauteur), de sorte que la première extrémité d'un tronçon peut être insérée dans la seconde extrémité d'un autre tronçon transversalement à l'extension longitudinale des tronçons, et **en ce que** les fils longitudinaux (6) sont fixés le long du parcours longitudinal, à l'exception des deux extrémités, à l'extérieur sur les fils transversaux (3) de forme identique, **en ce que** sur la première extrémité, les fils longitudinaux (6) sont coudés de façon décalée vers l'intérieur de la dimension en section transversale d'un fil transversal et au moins un fil transversal (5) est fixé à l'extérieur sur la zone des fils longitudinaux (6) suivant le coude, l'épaisseur de la base du fil transversal (5) étant deux fois plus grande que celle des autres fils transversaux (3), et **en ce que** sur la seconde extrémité, au moins deux fils transversaux (4) de dimension de base plus grande sont disposés de façon étroitement voisine, en formant entre eux une fente de la largeur du fil transversal (5), les fils longitudinaux coudés (6) s'élargissant étant fixés à l'extérieur sur ces fils transversaux (4), ou de façon à présenter une distance longitudinale l'une par rapport à l'autre qui est supérieure, du double de l'épaisseur du fil, à la distance entre deux fils transversaux (5), qui sont disposés à distance l'un de l'autre à la première extrémité dans la zone suivant le coude.

3. Conduite de câbles en fils selon l'une quelconque des revendications 1 et 2, **caractérisée en ce que** les fils transversaux (4, 5) présentent sur les première et seconde extrémités des déformations encliquetables (8), qui se mettent en prise les unes dans les autres lorsque les tronçons sont enfichés les uns dans les autres.
